# EUROPEAN PATENT APPLICATION

(11) **EP 4 815 425 A1**
(43) Date of publication of application: **30.09.2026**
(21) Application number: 25199933.0
(22) Date of filing: 03.09.2025
(51) Int. Cl.: H04N 1/00, H04N 1/60, H04N 1/387

(54) **IMAGE FORMING SYSTEM, IMAGE FORMING PROGRAM, AND METHOD FOR PRINTED MATERIAL CORRECTION**

(30) Priority: 24.03.2025 JP 2025048103
(71) Applicant: Fujifilm Business Innovation Corp., Tokyo 107-0052 (JP)
(72) Inventor: KOMAZAWA, Hisao, Yokohama (JP); YASUDA, Akiho, Yokohama (JP)
(74) Representative: Meissner Bolte Partnerschaft mbB

(57) **Abstract**

An image forming system includes: a processor in which the processor is configured to: acquire image information about printed material having a predetermined first attribute until a number of pieces of the printed material having the first attribute except for printed material associated with a second attribute that differs from the first attribute reaches a first prescribed number; calculate a reference value of the image information about the printed material having the first attribute by using the image information about the printed material having the first attribute that is acquired; and make image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

## Description

### Background

### (i) Technical Field

The present disclosure relates to an image forming system, an image forming program, and a method.

### (ii) Related Art

An image forming device disclosed in Japanese Unexamined Patent Application Publication No. 2024-121004 includes an image forming unit that forms an image on a sheet, a detection unit that detects the image that is formed on the sheet, a controller that implements control for forming a chart for gradation correction by using the image forming unit in the case where the number of printed pages reaches a predetermined page count after a job for forming the image on the sheet starts, and a reception unit that receives the selection of a sheet that is used for the chart for gradation correction from multiple kinds of sheets.

An image forming device disclosed in Japanese Unexamined Patent Application Publication No. 2013-167809 includes multiple feed trays, an image forming unit that forms an image on paper that is fed from a selected one of the multiple feed trays, a density sensor that measures the density of the image that is formed on the paper by the image forming unit, a controller that causes the image forming unit to form a test image on paper and that controls execution of an output paper density adjustment for adjusting a density correction characteristic during printing, based on a result obtained by measuring the density of the test image on the paper by using the density sensor, a paper related information setting part that sets paper related information relating to the paper and including predetermined paper setting information referred in the output paper density adjustment so as to relate the paper related information with the feed trays, and a substitute feed tray setting part that receives a setting of a substitute feed tray for feeding the paper in the output paper density adjustment. The controller executes the output paper density adjustment by changing the tray for feeding the paper from one of the feed trays that is designated in a print job to the substitute feed tray with a predetermined timing while the print job is executed regardless of the paper setting information related to the substitute feed tray.

An information processing apparatus disclosed in Japanese Unexamined Patent Application Publication No. 2021-153242 includes a first generation unit that generates page description data in which a page image and the paper type of paper on which the page image is printed are set and a second generation unit that generates a print instruction including the page description data and information about a print setting of a patch image for gradation correction. As for the print setting, whether the patch image that is composited on the page image is outputted, or whether the patch image is outputted as a page image that differs from the page image that is set in the page description data is determined. In the case where the patch image cannot be composited on the single page image, and the number of page images that set a paper type that differs from a first paper type among page images that set the first paper type in the page description data between the first page image and a second page image that is subsequently printed is equal to or more than a predetermined number, the second generation unit configures the print setting of the patch image such that the patch image is outputted as a page image that differs from the page image that is set in the page description data.

### Summary

A printer has a function of image correction for a sense of unity of the result of printing. Specifically, the printer acquires image information about a prescribed number of printed materials and calculates a reference value of the image information regarding the printed materials by using the acquired image information. In this state, the printer corrects images of the printed materials such that the image information about subsequent printed materials approaches the reference value.

However, the existing printer cancels the calculated reference value when an attribute of printed material changes and calculates a new reference value. Accordingly, if the attribute of printed materials repeatedly changes until the prescribed number that is needed to calculate the reference value, the reference value is subsequently not calculated. As a result, the function of image correction is not performed.

Accordingly, it is an object of the present disclosure to provide an image forming system, an image forming program, and a method that enable images of printed materials to be continuously corrected even in the case where an attribute of printed material changes halfway.

According to a first aspect of the present disclosure, there is provided an image forming system including: a processor, and the processor is configured to: acquire image information about printed material having a predetermined first attribute until a number of pieces of the printed material having the first attribute except for printed material associated with a second attribute that differs from the first attribute reaches a first prescribed number; calculate a reference value of the image information about the printed material having the first attribute by using the image information about the printed material having the first attribute that is acquired; and make image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

According to a second aspect of the present disclosure, there is provided the image forming system according to the first aspect in which the first attribute and the second attribute represent different printed material structures, and the first attribute represents a text of a booklet, and the second attribute represents a front cover of the booklet.

According to a third aspect of the present disclosure, there is provided the image forming system according to the first aspect in which the first attribute and the second attribute represent different printed material paper types, and the first attribute is a first paper type, and the second attribute is a second paper type.

According to a fourth aspect of the present disclosure, there is provided the image forming system according to the third aspect in which the processor is configured not to correct image information about printed material of the second paper type subsequent to the first specified printed material and the first specified printed material.

According to a fifth aspect of the present disclosure, there is provided the image forming system according to the fourth aspect in which the processor is configured to: change a target for calculation of the reference value from printed material of the first paper type into the printed material of the second paper type, and calculate the reference value again after a number of pieces of the printed material of the second paper type reaches a second prescribed number in a case where the printed material of the second paper type continues up to the second prescribed number; and make image correction of printed material such that image information about the printed material of the second paper type subsequent to a second specified printed material and the second specified printed material gets closer to the reference value in a case where the second specified printed material that is printed material of the second paper type having image information out of the reference value is detected after the number of pieces of the printed material of the second paper type reaches the first prescribed number.

According to a sixth aspect of the present disclosure, there is provided the image forming system according to the fifth aspect in which the second prescribed number is set by a user.

According to a seventh aspect of the present disclosure, there is provided an image forming program causing a computer to execute a process including: acquiring image information about printed material having a predetermined first attribute until a number of pieces of the printed material having the first attribute except for printed material associated with a second attribute that differs from the first attribute reaches a first prescribed number; calculating a reference value of the image information about the printed material having the first attribute by using the image information about the printed material having the first attribute that is acquired; and making image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

According to an eighth aspect of the present disclosure, there is provided a method including: acquiring image information about printed material having a predetermined first attribute until a number of pieces of the printed material having the first attribute except for printed material associated with a second attribute that differs from the first attribute reaches a first prescribed number; calculating a reference value of the image information about the printed material having the first attribute by using the image information about the printed material having the first attribute that is acquired; and making image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

According to the first aspect, the seventh aspect, and the eighth aspect, images of printed materials can be continuously corrected even in the case where an attribute of printed material changes halfway.

According to the second aspect, images of printed materials can be continuously corrected even in the case where printed material structure changes halfway.

According to the third aspect, images of printed materials can be continuously corrected even in the case where the paper type of printed material changes halfway.

According to the fourth aspect, images of printed materials of the first paper type can be continuously corrected.

According to the fifth aspect, image correction of printed material after the paper type changes can be made.

According to the sixth aspect, the criteria for determination for the image forming system to determine that the paper type changes can be changed depending on the state of printed material.

### Brief Description of the Drawings

Exemplary embodiments of the present disclosure will be described in detail based on the following figures, wherein:
Fig. 1 illustrates an example of a functional configuration of an image forming system;
Fig. 2 illustrates an example of a principal structure of an electrical system for the image forming system;
Fig. 3 illustrates the printing status of a booklet in a first example;
Fig. 4 illustrates an example of a selection screen;
Fig. 5 is a flowchart illustrating an example of the flow of a print process in the first example;
Fig. 6 illustrates an example in which sheets are printed in the print process in the first example;
Fig. 7 illustrates the printing status of the booklet in a second example;
Fig. 8 is a flowchart illustrating an example of the flow of the print process in the second example;
Fig. 9 illustrates an example in which sheets are printed in the print process in the second example;
Fig. 10 illustrates an example in which sheets are printed for use in the description of a change in a target to be corrected; and
Fig. 11 illustrates a correction status in the case where the target to be corrected is changed.

### Detailed Description

An exemplary embodiment will hereinafter be described with reference to the drawings. Like components and like processes are designated by using like reference characters in all of the drawings, and a duplicated description is omitted. In the drawings, ratios of dimensions are exaggerated for convenience of description and differ from actual ratios in some cases.

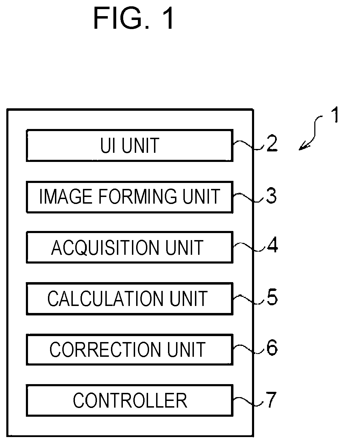

Fig. 1 illustrates an example of a functional configuration of an image forming system 1 according to the present disclosure. The image forming system 1 prints printed materials such as a leaflet and a booklet by using a printer, based on a request from a customer. The booklet is printed material that has multiple pages. According to the present disclosure, a recording medium on which an image is formed such as paper is referred to as a "sheet".

As illustrated in Fig. 1, the image forming system 1 includes a UI unit 2, an image forming unit 3, an acquisition unit 4, a calculation unit 5, a correction unit 6, and functional units of a controller 7. "UI" is an abbreviation for a user interface.

The UI unit 2 receives information from a user and provides information about the image forming system 1 to the user. For example, the UI unit 2 receives various instructions such as a print instruction and print data from the user. For example, the print data includes image data that is printed on sheets and print information about an image. For example, the print information about the image includes items such as the specification of printed material structure and the specification of the type of paper on which the image is printed. In the case where the printed material is a booklet, for example, the booklet includes a front cover and a text. The printed material structure is information that represents differences regarding the structure of the booklet such as the front cover and the text. Information that affects image printing such as the items in the print information is referred to as an "attribute". The print information is written by using a page description language (PDL).

For example, the UI unit 2 receives the various instructions and the print data from an external terminal via a communication line (not illustrated), but a method of receiving the various instructions is not limited thereto. For example, the UI unit 2 may receive the various instructions and the print data from a front end of the image forming system 1.

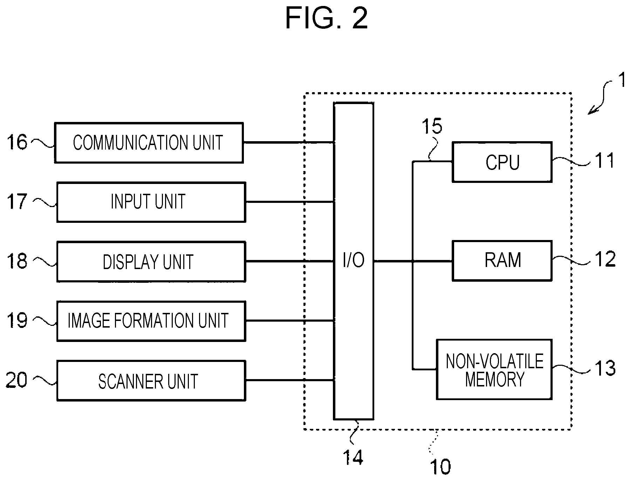

The image forming unit 3 forms the image that is expressed by the image data on each sheet by using an image formation unit 19 (see Fig. 2). A method of forming the image regarding the image forming unit 3 may be any method, and examples thereof include an electrophotographic system, an ink-jet system, and an offset printing system.

The acquisition unit 4 acquires the image information about the image that is formed on the sheets. For example, the image information that is acquired by the acquisition unit 4 includes an image density and information about image position on the sheets.

Each sheet on which the image is formed is transported along a transport path. Accordingly, the acquisition unit 4 optically reads the sheet on which the image is formed by using a scanner unit 20 (see Fig. 2) that is provided on the transport path. The acquisition unit 4 acquires the image information from the image on the sheet that is read by the scanner unit 20, that is, from a sheet image for every sheet.

The calculation unit 5 calculates a reference value of the image information by using the image information that is acquired by the acquisition unit 4 for every sheet. Specifically, the calculation unit 5 calculates the reference value of the image information by using image information about a predetermined number of one or more sheets among sheets associated with an attribute that is predetermined by the user regarding a specified item in the print information.

For example, suppose that the specified item in the print information is the structure of the booklet and that the attribute that is predetermined by the user is an attribute about a sheet that includes a text. In addition, suppose that a sheet number that is predetermined by the user is 5. In this case, the calculation unit 5 calculates the reference value of the image information by using image information about five sheets that include the text that is acquired after printing starts.

Specifically, the calculation unit 5 determines that the reference value of the image density of the sheets that include the text is the average value of the image density of the five sheets that include the text. The calculation unit 5 also determines that the reference value of the information about image position on the sheets that include the text is the average value of displacement amounts, regarding the five sheets that include the text, between an image position that is specified by the image data and the position of the image that is formed on the sheets. The reference value of the image density and the reference value of the information about image position are examples of the reference value of the image information.

According to the present disclosure, the attribute that is predetermined by the user in the specified item in the print information is referred to as a "first attribute", and an attribute other than the first attribute in the item is referred to as a "second attribute" in some cases. In the case of the example described above, the "structure of the booklet" is an example of the specified item in the print information, and the "text" is an example of the first attribute. An attribute other than the text in the structure of the booklet such as a "front cover" is an example of the second attribute. The number of the sheets that have the first attribute that is used for calculating the reference value of the image information about the sheets that have the first attribute is referred to as a "prescribed number N1". The prescribed number N1 is an example of a first prescribed number according to the present disclosure. In the case of the example described above, the prescribed number N1 is 5. Each sheet that is used for calculating the reference value of the image information is referred to as a "reference value calculation sheet".

In the case where a sheet that has image information out of the reference value and that has the first attribute is detected after the number of pieces of the printed materials that have the first attribute reaches the first prescribed number, the correction unit 6 makes image correction such that the image information about a sheet that has the first attribute subsequent to the sheet and the sheet gets closer to the reference value. Specifically, in the case of the example described above, the correction unit 6 makes image correction regarding a sheet that has the image information out of the reference value and that has the text among sheets subsequent to the last reference value calculation sheet after the reference value of the image information is calculated by using five reference value calculation sheets. The image information out of the reference value means that the image information is out of a predetermined range that contains the reference value.

The controller 7 controls the UI unit 2, the image forming unit 3, the acquisition unit 4, the calculation unit 5, and the correction unit 6 such that the functional units perform the processing described above in cooperation with each other.

For example, the image forming system 1 that has the functional configuration illustrated in Fig. 1 includes a computer 10.

Fig. 2 illustrates an example of a principal structure of an electrical system of the image forming system 1 that includes the computer 10.

The computer 10 that is included in the image forming system 1 includes a central processing unit (CPU) 11 that is an example of a processor that fulfills the functions of the functional units. The computer 10 also includes a random access memory (RAM) 12 that is temporarily used as a work area for the CPU 11, a non-volatile memory 13, and an input-output interface (I/O) 14. The CPU 11, the RAM 12, the non-volatile memory 13, and the I/O 14 are connected to each other with a bus 15 interposed therebetween.

The non-volatile memory 13 is an example of a storage device that maintains stored information even when power that is supplied to the non-volatile memory 13 is shielded. For example, the non-volatile memory 13 is a semiconductor memory but may be a hard disk. Information that is to be kept stored even when the power of the computer 10 is shielded is stored in the non-volatile memory 13.

For example, a communication unit 16, an input unit 17, a display unit 18, the image formation unit 19, and the scanner unit 20 are connected to the I/O 14.

The communication unit 16 is connected to the internet or a local area network (LAN) and has a communication protocol for transmitting and receiving data to and from an external device.

The input unit 17 is a device that receives a user instruction and notifies the CPU 11. Examples of the input unit 17 include a button, a touch screen, a mouse, and a keyboard.

The display unit 18 is an example of a display device that displays information that is processed by the CPU 11 as an image. Examples of the display unit 18 include a liquid-crystal display or an organic electro luminescence (EL) display.

The image formation unit 19 forms the image that is expressed by the image data on each sheet in accordance with an instruction from the CPU 11.

The scanner unit 20 optically reads each sheet on which the image is formed and outputs the sheet image in accordance with an instruction from the CPU 11.

### First Example

Actions of the image forming system 1 will now be described. For convenience of description below, the sheets are designated as "sheets 8". Auxiliary reference characters of "-K" are added to the sheets 8 as the "sheet 8-K" in order to distinguish between the sheets 8, where K is an integer of 1 or more.

The actions of the image forming system 1 will be described by using an example in which multiple copies of a booklet that has four pages in total where the front cover has the front page and the text has subsequent three pages are printed. Coated paper that is shiny is used as the front cover. The sheets 8 on which no coating agent is applied such as plain paper are used for the text. The coated paper has higher reproducibility of color than the plain paper. Accordingly, the coated paper is often used for the front cover. The type of the plain paper is an example of a first paper type according to the present disclosure, and the type of the coated paper is an example of a second paper type according to the present disclosure.

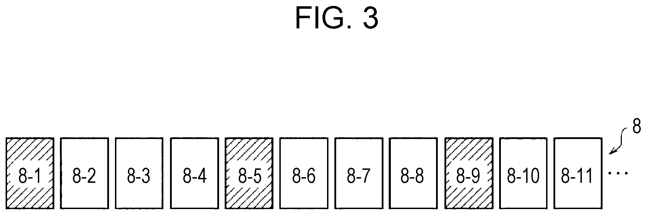

Fig. 3 illustrates the printing status of the booklet in a first example. In Fig. 3, a sheet 8-1, a sheet 8-5, and a sheet 8-9 that are hatched correspond to the front cover of the booklet. A sheet 8-2 to a sheet 8-4, a sheet 8-6 to a sheet 8-8, a sheet 8-10, and a sheet 8-11 that are not hatched correspond to the text of the booklet.

For example, association between the structure of the booklet and the sheets 8 is included in the print information. The specification of the paper type of each sheet 8 associated with the structure of the booklet is included in the print information.

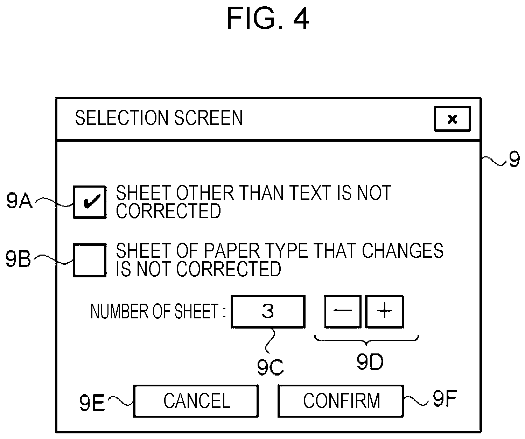

Fig. 4 illustrates an example of a selection screen 9 on which the sheet 8 that is a target for image correction is selected. For example, the selection screen 9 is displayed by the display unit 18. In the case where the image correction of the sheets 8 of the text is made, the user places a check mark on a checkbox 9A of the selection screen 9. The sheets 8 other than the text regarding the structure of the booklet are not corrected with the check mark placed on the checkbox 9A. That is, the image forming system 1 does not make image correction of the sheets 8 corresponding to the front cover.

Settings configured on the selection screen 9 are canceled when the user pushes a cancel button 9E. The settings configured on the selection screen 9 are confirmed when the user pushes a confirmation button 9F. A checkbox 9B, an edit box 9C, and spin buttons 9D will be described later.

In processing in the first example described below, the user places the check mark on the checkbox 9A of the selection screen 9. That is, as for the structure of the booklet, the text is the first attribute, and the front cover is the second attribute. The attribute of the sheet 8 that is the target for image correction may be included in the print information in advance. In this case, it is not necessary to set the sheet 8 that is the target for image correction on the selection screen 9.

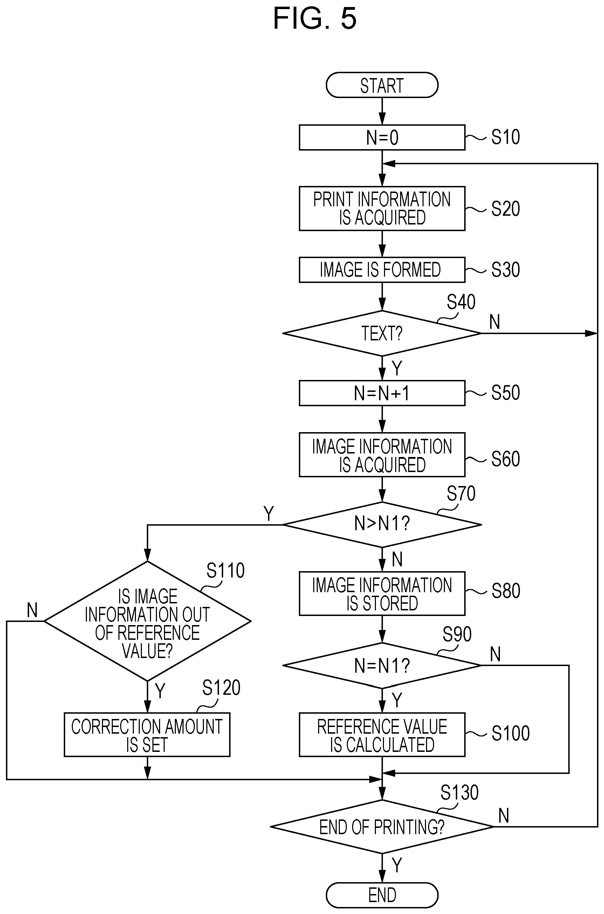

Fig. 5 is a flowchart illustrating an example of the flow of a print process that is performed by the CPU 11 of the computer 10 in the case where a print instruction is received from the user. For example, an image forming program that defines the print process is stored in advance in the non-volatile memory 13. The CPU 11 reads the image forming program that is stored in the non-volatile memory 13 and performs the print process.

At step S10, the CPU 11 initializes the number of the sheets 8 that have the first attribute, that is, a variable N that represents the number of the sheets 8 of the text to "0".

At step S20, the CPU 11 acquires the print information associated with the sheet 8 on which the image is formed by the image formation unit 19.

At step S30, the CPU 11 controls the image formation unit 19 such that the image is formed on the sheet 8 in accordance with the acquired print information.

At step S40, the CPU 11 refers the acquired print information and determines whether the structure of the booklet associated with the sheet 8 is the text. In the case where the structure of the booklet associated with the sheet 8 is not the text, the CPU 11 performs a process at step S20 for forming the image on the next sheet 8.

In the case where the structure of the booklet associated with the sheet 8 is the text, a process at step S50 is performed.

In this case, the sheet 8 on which the image is formed is the sheet 8 of the text, and for this reason, the CPU 11 adds "1" into the variable N at step S50.

At step S60, the CPU 11 acquires the image information from the sheet image on the sheet 8 of the text that is acquired by the scanner unit 20.

At step S70, the CPU 11 determines whether the variable N exceeds the prescribed number N1. For example, the prescribed number N1 is stored in advance in the non-volatile memory 13. The prescribed number N1 is changeable by the user. In the case where the variable N is equal to or less than the prescribed number N1, a process at step S80 is performed.

At step S80, the CPU 11 stores the image information that is acquired at step S60 in the RAM 12.

At step S90, the CPU 11 determines whether the variable N is equal to the prescribed number N1, that is, whether the variable N reaches the prescribed number N1. In the case where the variable N does not reach the prescribed number N1, a process at step S130 is performed.

At step S130, the CPU 11 determines whether the acquired print information represents an instruction on ending printing. For example, the print information associated with the last sheet 8 includes an end command that represents the end of printing. The CPU 11 may determine whether the instruction on ending printing is represented by checking the presence or absence of the end command.

In the case where the instruction on ending printing is not represented, a process at step S20 is performed. That is, the CPU 11 acquires the image information about the sheets 8 of the text until the number of the sheets 8 of the text except for the sheets 8 of the front cover reaches the prescribed number N1.

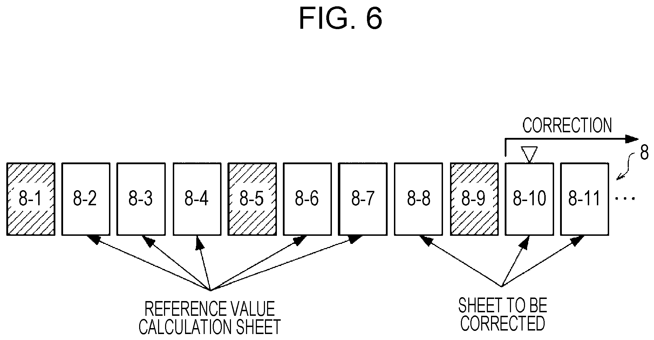

Fig. 6 illustrates an example in which the sheets 8 are printed in the print process in the first example. In Fig. 6, the sheet 8-1, the sheet 8-5, and the sheet 8-9 correspond to the front cover. Accordingly, for example, in the case where the prescribed number N1 is 5, the CPU 11 deals with five sheets 8 of the sheet 8-2 to the sheet 8-4, the sheet 8-6, and the sheet 8-7 as the reference value calculation sheets and acquires the image information about the reference value calculation sheets.

In the case where it is determined in a determination process at step S90 in Fig. 5 that the variable N reaches the prescribed number N1, a process at step S100 is performed.

At step S100, the CPU 11 calculates the reference value of the image information by using the image information about the sheets 8 of text that is stored in the RAM 12 at step S80. After the reference value of the image information is calculated, the process at step S130 is performed. That is, in the case of the example of printing illustrated in Fig. 6, the CPU 11 calculates the reference value of the image information by using the image information about the five sheets 8 of the sheet 8-2 to the sheet 8-4, the sheet 8-6, and the sheet 8-7 after the image information about the sheet 8-7 is acquired.

In the case where it is determined that the variable N exceeds the prescribed number N1 at step S70 in Fig. 5, a process at step S110 is performed. The sheet 8 when it is determined that the variable N exceeds the prescribed number N1 is the sheet 8 of the text after the variable N reaches the prescribed number N1. In the case of the example of printing illustrated in Fig. 6, the sheets 8 subsequent to the sheet 8-8 and the sheet 8-8 have the variable N that exceeds the prescribed number N1.

At step S110 in Fig. 5, the CPU 11 determines whether the image information about the sheet 8 is out of the reference value that is calculated at step S100. In the case where the image information about the sheet 8 is out of the reference value, a process at step S120 is performed.

At step S120, the CPU 11 sets a correction amount such that the image information about the sheet 8 gets closer to the reference value and controls the image formation unit 19 such that image correction depends on the correction amount.

For example, in the case where the image density is out of the reference value and is high, the CPU 11 reduces the amount of a color material that is attached to the sheet 8 such that the density is lower than a density that is specified by the image data. For example, in the case where there is a displacement amount between the position of the image on the sheet 8 and the reference value, the CPU 11 changes the position of the image to be formed that is specified by the image data such that the displacement amount is reduced.

The CPU 11 continues correcting the image that is formed on the subsequent sheet 8 of the text in accordance with the correction amount that is set at step S120 until a new sheet 8 of the text that has the image information out of the reference value is detected.

In the print process in the first example, the sheets 8 that have the first attribute after the number of the sheets 8 that have the first attribute (in the case of the example described above, the attribute of the "text") reaches the prescribed number N1 are thus corrected. Accordingly, the sheets 8 that have the first attribute after the number of the sheets 8 that have the first attribute reaches the prescribed number N1 are referred to as the "sheets to be corrected". In the case of the example of printing illustrated in Fig. 6, the sheets 8 subsequent to the sheet 8-8 and the sheet 8-8 except for the sheets 8 of the front cover are the sheets to be corrected. If the image information about the sheet 8-10 is out of the reference value, the CPU 11 makes image correction of the sheets to be corrected subsequent to the sheet 8-10 and the sheet 8-10 by the correction amount that is acquired from the image information about the sheet 8-10 until a new sheet to be corrected that has the image information out of the reference value is detected. In the case where the new sheet to be corrected that has the image information out of the reference value is detected, the image correction of the sheets to be corrected subsequent to the new sheet to be corrected and the new sheet to be corrected is made by the correction amount that is acquired from the new sheet to be corrected. The sheet 8 when it is determined that the image information is out of the reference value among the sheets to be corrected as in the sheet 8-10 in Fig. 6 is an example of a first specified printed material according to the present disclosure.

In the case where it is determined in the determination process at step S110 in Fig. 5 that the image information about the sheet 8 is equal to the reference value, the process at step S130 is performed.

In the case where it is determined that the instruction on ending printing is represented at step S130, the CPU 11 ends the print process illustrated in Fig. 5.

As for the structure of the booklet, the image forming system 1 in the first example does not deal with the sheets 8 that have the attribute other than the text as the reference value calculation sheets. Accordingly, the reference value of the image information may be calculated even in the case where the attribute of the sheets 8 regarding the structure of the booklet changes before the number reaches the prescribed number N1. As a result, the images on the sheets 8 that have the attribute of the text may be continuously corrected.

In the example described in the first example, the sheets 8 of the text are the target for image correction, but the sheets 8 of the front cover may be the target for image correction. Second Example

In the first example, the actions of the image forming system 1 are described by using the example in which the attribute of sheets 8 regarding the structure of the booklet changes during printing. In a second example, the actions of the image forming system 1 will be described by using an example in which the attribute of the paper type of the sheets 8 changes during printing.

Also in the second example, the actions of the image forming system 1 will be described by using an example in which multiple copies of a booklet that has four pages in total are printed. In some cases, different paper types such as the coated paper and the plain paper are used depending on the purpose of the booklet as described above. In the second example, multiple copies of the booklet in which the coated paper is used for the last page, that is, the fourth page and the plain paper is used for pages other than the last page are printed.

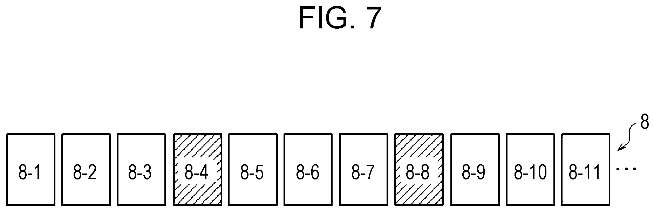

Fig. 7 illustrates the printing status of the booklet in the second example. In Fig. 7, the sheet 8-1 to the sheet 8-3, the sheet 8-5 to the sheet 8-7, and the sheet 8-9 to the sheet 8-11 that are not hatched are the sheets 8 of the plain paper. The sheet 8-4 and the sheet 8-8 that are hatched are the sheets 8 of the coated paper. For example, association between the paper type and the sheets 8 is included in the print information.

In the case where the sheets 8 of the booklet are printed by using multiple paper types, the user places a check mark on the checkbox 9B of the selection screen 9 illustrated in Fig. 4. The image forming system 1 does not correct the image on the sheet 8 of a paper type that changes from a predetermined paper type halfway with the check mark placed on the checkbox 9B.

In the second example, the user places the check mark on the checkbox 9B of the selection screen 9.

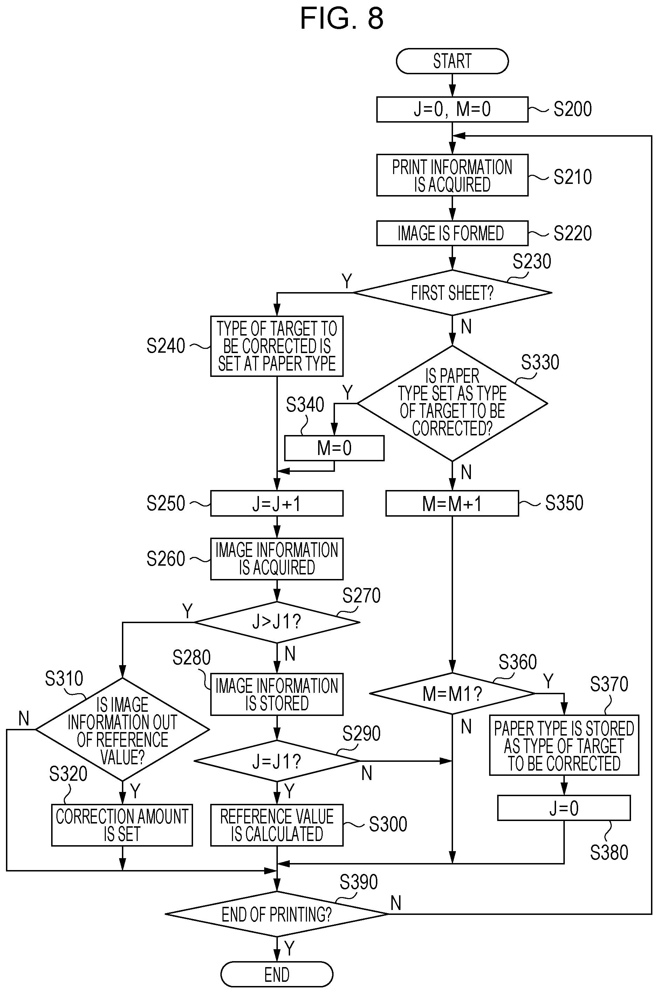

Fig. 8 is a flowchart illustrating an example of the flow of the print process that is performed by the CPU 11 of the computer 10 in the case where the print instruction is received from the user. For example, the image forming program that defines the print process is stored in advance in the non-volatile memory 13. The CPU 11 reads the image forming program that is stored in the non-volatile memory 13 and performs the print process.

At step S200, the CPU 11 initializes a variable J and a variable M to "0". The variable J represents the number of the sheets 8 of the paper type that is set as the target to be corrected. The variable M represents the number of the sheets 8 of the paper type that is not set as the target to be corrected.

At step S210, the CPU 11 acquires the print information associated with the sheet 8 on which the image is formed by the image formation unit 19.

At step S220, the CPU 11 controls the image formation unit 19 such that the image is formed on the sheet 8 in accordance with the acquired print information.

At step S230, the CPU 11 determines whether the sheet 8 on which the image is formed is the sheet 8 that is first printed, that is, the first sheet. In the case of the first sheet, a process at step S240 is performed.

At step S240, the CPU 11 sets the type of the target to be corrected at the paper type of the first sheet. That is, the paper type of the first sheet is the first attribute.

The type of the target to be corrected is set at the paper type of the first sheet, and consequently, the CPU 11 adds "1" into the variable J at step S250.

At step S260, the CPU 11 acquires the image information from the sheet image on the sheet 8 that is acquired by the scanner unit 20.

At step S270, the CPU 11 determines whether the variable J exceeds a prescribed number J1. For example, the prescribed number J1 is stored in advance in the non-volatile memory 13. In the second example, the prescribed number J1 is set at 5 by way of example. The prescribed number J1 is changeable by the user. In the case where the variable J is equal to or less than the prescribed number J1, a process at step S280 is performed.

At step S280, the CPU 11 stores the image information that is acquired at step S260 in the RAM 12.

At step S290, the CPU 11 determines whether the variable J is equal to the prescribed number J1, that is, whether the variable J reaches the prescribed number J1. In the case where the variable J does not reach the prescribed number J1, a process at step S390 is performed.

At step S390, the CPU 11 determines whether the acquired print information represents the instruction on ending printing. For example, the print information about the last sheet 8 includes a command that represents the end of printing. In the case where the instruction on ending printing is not represented, the process at step S210 is performed.

At step S210 performed after step S390, the print information about the sheets 8 subsequent to the first sheet is acquired. Accordingly, it is determined that the determination process at step S230 is not the first sheet, and accordingly, a process at step S330 is performed.

At step S330, the CPU 11 determines whether the paper type of the sheet 8 is the paper type that is set as the type of the target to be corrected. In the case where the paper type of the sheet 8 is the paper type that is set as the type of the target to be corrected, a process at step S340 is performed.

At step S340, the CPU 11 initializes the variable M to "0" and performs the process at step S250. Consequently, the CPU 11 performs processes at and after step S250.

In the case where it is determined that the paper type of the sheet 8 is the paper type that is not set as the type of the target to be corrected in the determination process at step S330, a process at step S350 is performed. That is, in the case where the paper type of the sheet 8 is changed during printing, the process at step S350 is performed.

In this case, the sheet 8 on which the image is formed is the sheet 8 of the paper type that is not set as the type of the target to be corrected. Accordingly, at step S350, the CPU 11 adds "1" into the variable M.

At step S360, the CPU 11 determines whether the variable M is equal to a prescribed number M1, that is, whether the variable M reaches the prescribed number M1. The prescribed number M1 is a threshold that is used to determine whether the type of the target to be corrected is changed into the paper type that is not set as the type of the target to be corrected. The prescribed number M1 is an example of a second prescribed number according to the present disclosure.

For example, the prescribed number M1 is set in the edit box 9C of the selection screen 9 illustrated in Fig. 4. The user increases or reduces a value in the edit box 9C by selecting a plus button or a minus button of the spin buttons 9D. Naturally, the user may directly input the value of the prescribed number M1 in the edit box 9C.

In the case where the variable M does not reach the prescribed number M1, the process at step S390 is performed, and the CPU 11 causes the image to be formed on the subsequent sheet 8 until printing ends.

That is, until the number of the sheets 8 of the paper type that is the same as the paper type of the first sheet reaches the prescribed number J1, the CPU 11 acquires the image information about the sheets 8 of the paper type.

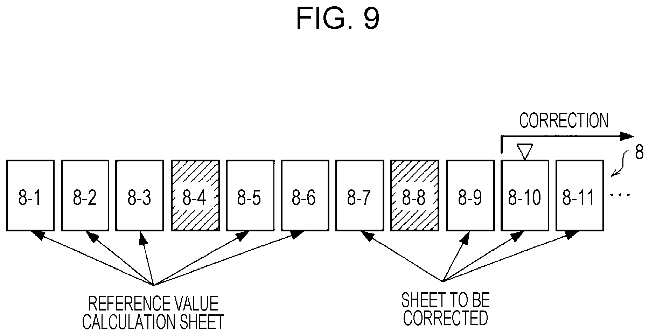

Fig. 9 illustrates an example in which the sheets 8 are printed in the print process in the second example. In Fig. 9, the paper type of the first sheet is the plain paper. Accordingly, in the case where the prescribed number J1 is 5, the CPU 11 deals with the five sheets 8 of the sheet 8-1 to the sheet 8-3, the sheet 8-5, and the sheet 8-6 except for the sheet 8-4 as the reference value calculation sheets and acquires the image information. That is, the plain paper is the first attribute, and the coated paper is the second attribute. In other words, the plain paper is the first paper type, and the coated paper is the second paper type.

In the case where it is determined that the variable J reaches the prescribed number J1 in the determination process at step S290 in Fig. 8, a process at step S300 is performed.

At step S300, the CPU 11 calculates the reference value of the image information by using the image information about the J1 sheets 8 that is stored in the RAM 12 at step S280. After the reference value of the image information is calculated, the process at step S390 is performed. That is, in Fig. 9, the CPU 11 calculates the reference value of the image information by using the image information about the five sheets 8 of the sheet 8-1 to the sheet 8-3, the sheet 8-5, and the sheet 8-6 after the image information about the sheet 8-6 is acquired.

In the case where it is determined that the variable J exceeds the prescribed number J1 at step S270 in Fig. 8, a process at step S310 is performed.

The sheets 8 after the variable J exceeds the prescribed number J1 mean the sheets 8 after the number of the sheets 8 of the paper type that is set as the type of the target to be corrected reaches the prescribed number J1. In the case of the example illustrated in Fig. 9, these are the sheets 8 subsequent to the sheet 8-7 and the sheet 8-7.

At step S310 in Fig. 8, the CPU 11 determines whether the image information about the sheet 8 is out of the reference value that is calculated at step S300. In the case where the image information about the sheet 8 is out of the reference value, a process at step S320 is performed.

At step S320, the CPU 11 sets the correction amount such that the image information about the sheet 8 gets closer to the reference value and controls the image formation unit 19 such that image correction depends on the correction amount.

In the second example, the sheets to be corrected are the sheets 8 of the paper type that is set as the type of the target to be corrected. In the case of the example of printing illustrated in Fig. 9, the sheets 8 of the sheet 8-7 and the sheet 8-9 to 8-11 are the sheets to be corrected. The sheet 8-10 is the sheet 8 that has the image information out of the reference value. That is, the sheet 8-10 in Fig. 9 is an example of the first specified printed material.

The CPU 11 continues correcting the image that is formed on the subsequent sheet to be corrected in accordance with the correction amount that is set at step S320 until a new sheet to be corrected that has the image information out of the reference value is detected.

In the case where it is determined in the determination process at step S310 in Fig. 8 that the image information about the sheet 8 is not out of the reference value, the process at step S390 is performed.

In the case where it is determined that the paper type of the sheet 8 is the paper type that is not set as the type of the target to be corrected in the determination process at step S330, "1" is added into the variable M at step S350 as described above. In this case, when the sheet 8 of the paper type that is set as the type of the target to be corrected is printed after the sheet 8 of the paper type that is not set as the type of the target to be corrected, the variable M is initialized to "0" at step S340. Accordingly, in the case where the M1 sheets 8 of the paper type that is not set as the type of the target to be corrected are continuously printed, the variable M reaches the prescribed number M1.

As a result, in the case where it is determined that the variable M reaches the prescribed number M1 in the determination process at step S360, a process at step S370 is performed.

At step S370, the CPU 11 changes the paper type that is not set as the type of the target to be corrected associated with the variable M into a new type of the target to be corrected. For example, in the case of the example of printing illustrated in Fig. 9, the type of the sheets 8 of the coated paper is the type of the target to be corrected. That is, the coated paper is the first attribute, and the plain paper is the second attribute.

Since the paper type of the target to be corrected is changed, the CPU 11 initializes the variable J to "0" at step S380 and performs the process at step S390. That is, the CPU 11 changes the target to be corrected such that the image correction of the sheets 8 of the paper type that is the new type of the target to be corrected is made.

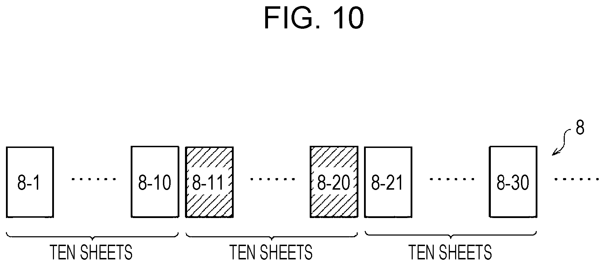

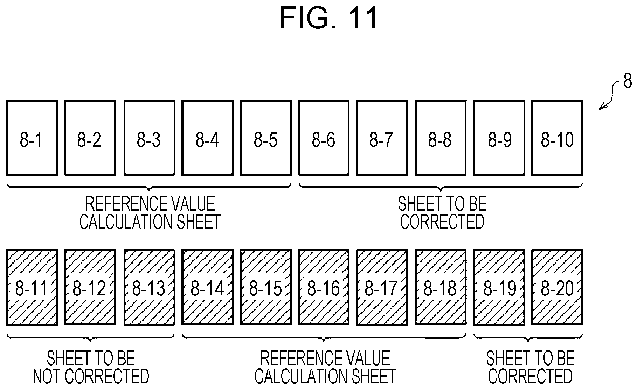

The change in the target to be corrected will be described in detailed with reference to Fig. 10 and Fig. 11.

Fig. 10 illustrates an example in which the sheets 8 are printed, which is used for describing the change in the target to be corrected. In Fig. 10, the sheets 8-1 to 8-10 and the sheets 8-21 to 8-30 that are not hatched are the sheets 8 of the plain paper. The sheets 8-11 to 8-20 that are hatched are the sheets 8 of the coated paper. That is, Fig. 10 illustrates the example in which the image is printed on ten pieces of the plain paper, and subsequently, the image is printed on ten pieces of the coated paper in turn.

Fig. 11 illustrates the correction status in the case where the example of printing illustrated in Fig. 10 is applied to the print process in the second example illustrated in Fig. 8.

The first page in the example of printing illustrated in Fig. 10 is the plain paper. Accordingly, as illustrated in Fig. 11, the sheets 8-1 to 8-5 are the reference value calculation sheets. Similarly, the sheets 8-6 to 8-10 that are the sheets 8 of the plain paper are the sheets to be corrected based on the reference value of the image information that is calculated depending on the sheets 8-1 to 8-5. Subsequently, the paper type is changed into the coated paper from the sheet 8-11. In this case, the determination process at step S360 in Fig. 8 causes the CPU 11 to deal with the sheets 8 of the coated paper as sheets that are not corrected until the number of sheets 8 of the coated paper that are continuously printed reaches about the prescribed number M1 (three in this case). That is, in Fig. 11, the CPU 11 determines that the sheets 8-11 to 8-13 are not corrected.

About the prescribed number M1 of the sheets 8 of the different paper type are continuously printed, and accordingly, it is determined from this that the different paper type is the paper type. Accordingly, the CPU 11 changes the target for image correction into the sheets 8 of the different paper type and calculates the reference value again after the number of the sheets 8 of the different paper type reaches the prescribed number M1. In the case of the example of printing illustrated in Fig. 11, the sheets 8-14 to 8-18 are new reference value calculation sheets.

In this case, the sheets 8 that have the same paper type as the new reference value calculation sheets and that are subsequent to the new reference value calculation sheets are the sheets to be corrected. For example, suppose that the sheet 8 that has the image information out of the reference value is detected from the sheets to be corrected. In this case, the CPU 11 makes image correction of the sheets to be corrected such that the image information about the sheets to be corrected subsequent to the sheet 8 that has the image information out of the reference value and the sheet 8 that has the image information out of the reference value gets closer to the reference value.

Finally, in the case where it is determined that the instruction on ending printing is represented in the determination process at step S390 in Fig. 8, the print process illustrated in Fig. 8 ends.

The image forming system 1 in the second example determines that the sheets 8 of the paper type other than the paper type of the first sheet are not included in the reference value calculation sheets. Accordingly, the reference value of the image information may be calculated even in the case where the attribute of the sheets 8 regarding the paper type changes before the number reaches the prescribed number J1. As a result, image correction of the sheets 8 of the same paper type as the paper type of the first sheet may be continuously made.

The image forming system 1 in the second example changes the target for image correction into the sheets 8 of the paper type other than the paper type of the first sheet in the case where about the prescribed number M1 of the sheets 8 of the paper type other than the paper type of the first sheet continues.

In the second example, two paper types of the plain paper and the coated paper are thought as that of the booklet. However, three or more paper types may be used for the booklet. The prescribed number J1 and the prescribed number M1 may be changed for every paper type.

An aspect of the image forming system 1 is described by using the exemplary embodiment described above, but the disclosed exemplary embodiment for the image forming system 1 is described by way of example. The exemplary embodiment for the image forming system 1 is not limited to the range of the exemplary embodiment described above. Various modifications or improvements may be added into the exemplary embodiment without departing from the spirit of the present disclosure. Exemplary embodiments into which the modifications or improvements are added are included in the technical range of the disclosure. For example, the order of internal processes in the print process illustrated in Fig. 5 and Fig. 8 may be changed without departing from the spirit of the present disclosure.

In an example according to the exemplary embodiment described above, the print process is performed by using software. However, the same processing as that illustrated in the flowcharts may be performed by using hardware. In this case, throughput is higher than that in the case where the print process is performed by using software.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The image forming system 1 may download the image forming program from an external device via the communication unit 16 and may store the downloaded image forming program in the non-volatile memory 13.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An image forming system includes:
   a processor configured to:
   acquire image information about printed material having a predetermined first attribute until a number of pieces of the printed material having the first attribute except for printed material associated with a second attribute that differs from the first attribute reaches a first prescribed number;
   calculate a reference value of the image information about the printed material having the first attribute by using the image information about the printed material having the first attribute that is acquired; and
   make image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.
(((2))) As for the image forming system described in (((1))),
   the first attribute and the second attribute represent different printed material structures, and
   the first attribute represents a text of a booklet, and the second attribute represents a front cover of the booklet.
(((3))) As for the image forming system described in (((1))),
   the first attribute and the second attribute represent different printed material paper types, and
   the first attribute is a first paper type, and the second attribute is a second paper type.
(((4))) As for the image forming system described in (((3))),
   the processor is configured not to correct image information about printed material of the second paper type subsequent to the first specified printed material and the first specified printed material.
(((5))) As for the image forming system described in (((4))),
   the processor is configured to:
   change a target for calculation of the reference value from printed material of the first paper type into the printed material of the second paper type, and calculate the reference value again after a number of pieces of the printed material of the second paper type reaches a second prescribed number in a case where the printed material of the second paper type continues up to the second prescribed number; and
   make image correction of printed material such that image information about the printed material of the second paper type subsequent to a second specified printed material and the second specified printed material gets closer to the reference value in a case where the second specified printed material that is printed material of the second paper type having image information out of the reference value is detected after the number of pieces of the printed material of the second paper type reaches the first prescribed number.
(((6))) As for the image forming system described in (((5))),
   the second prescribed number is set by a user.
(((7))) An image forming program causing a computer to execute a process including:
   acquiring image information about printed material having a predetermined first attribute until a number of pieces of the printed material having the first attribute except for printed material associated with a second attribute that differs from the first attribute reaches a first prescribed number;
   calculating a reference value of the image information about the printed material having the first attribute by using the image information about the printed material having the first attribute that is acquired; and
   making image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

The image forming system according to (((1))) and the image forming program according to (((7))), images of printed materials can be continuously corrected even in the case where an attribute of printed material changes halfway.

The image forming system according to (((2))), images of printed materials can be continuously corrected even in the case where printed material structure changes halfway.

The image forming system according to (((3))), images of printed materials can be continuously corrected even in the case where the paper type of printed material changes halfway.

The image forming system according to (((4))), images of printed materials of the first paper type can be continuously corrected.

The image forming system according to (((5))), image correction of printed material after the paper type changes can be made.

The image forming system according to (((6))), the criteria for determination for the image forming system to determine that the paper type changes can be changed depending on the state of printed material.

## Claims

1. An image forming system comprising:
a processor configured to:
acquire image information about printed material having a predetermined first attribute until a number of pieces of the printed material having the first attribute except for printed material associated with a second attribute that differs from the first attribute reaches a first prescribed number;
calculate a reference value of the image information about the printed material having the first attribute by using the image information about the printed material having the first attribute that is acquired; and
make image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

2. The image forming system according to claim 1,
wherein the first attribute and the second attribute represent different printed material structures, and
wherein the first attribute represents a text of a booklet, and the second attribute represents a front cover of the booklet.

3. The image forming system according to claim 1,
wherein the first attribute and the second attribute represent different printed material paper types, and
wherein the first attribute is a first paper type, and the second attribute is a second paper type.

4. The image forming system according to claim 3,
wherein the processor is configured not to correct image information about printed material of the second paper type subsequent to the first specified printed material and the first specified printed material.

5. The image forming system according to claim 4,
wherein the processor is configured to:
change a target for calculation of the reference value from printed material of the first paper type into the printed material of the second paper type, and calculate the reference value again after a number of pieces of the printed material of the second paper type reaches a second prescribed number in a case where the printed material of the second paper type continues up to the second prescribed number; and
make image correction of printed material such that image information about the printed material of the second paper type subsequent to a second specified printed material and the second specified printed material gets closer to the reference value in a case where the second specified printed material that is printed material of the second paper type having image information out of the reference value is detected after the number of pieces of the printed material of the second paper type reaches the first prescribed number.

6. The image forming system according to claim 5,
wherein the second prescribed number is set by a user.

7. An image forming program causing a computer to execute a process comprising:
acquiring image information about printed material having a predetermined first attribute until a number of pieces of the printed material having the first attribute except for printed material associated with a second attribute that differs from the first attribute reaches a first prescribed number;
calculating a reference value of the image information about the printed material having the first attribute by using the image information about the printed material having the first attribute that is acquired; and
making image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.

8. A method comprising:
acquiring image information about printed material having a predetermined first attribute until a number of pieces of the printed material having the first attribute except for printed material associated with a second attribute that differs from the first attribute reaches a first prescribed number;
calculating a reference value of the image information about the printed material having the first attribute by using the image information about the printed material having the first attribute that is acquired; and
making image correction of printed material such that image information about printed material having the first attribute subsequent to a first specified printed material and the first specified printed material gets closer to the reference value in a case where the first specified printed material that is printed material having image information out of the reference value and having the first attribute is detected after the number of pieces of the printed material having the first attribute reaches the first prescribed number.
